# EUROPÄISCHE PATENTANMELDUNG

(11) **EP 1 956 690 A2**
(43) Veröffentlichungstag der Anmeldung: **13.08.2008**
(21) Anmeldenummer: 08002110.8
(22) Anmeldetag: 05.02.2008
(51) Int. Cl.: H01R 43/048, H01R 43/28

(54) **Kabelbearbeitungseinrichtung**

(30) Priorität: 08.02.2007 DE 102007006214
(71) Anmelder: Schäfer Werkzeug- und Sondermaschinenbau GmbH, 76669 Bad Schönborn (DE)
(72) Erfinder: Wuhrer, Alexander, 69190 Walldorf (DE); Schäfer, Markus, 76669 Bad Schönborn (DE); Neubauer, Stefan, 67166 Otterstadt (DE)
(74) Vertreter: Moldenhauer, Herbert

(57) **Zusammenfassung**

Eine Kabelbearbeitungseinrichtung, umfassend einen Schwenkarm (1), der an einem in horizontaler Richtung schwenkbaren und in Längsrichtung des Schwenkarms (1) verschiebbaren Schlitten (2) festgelegt ist und am vorderen Ende einen Kopf (10) trägt, in dem zumindest ein Greifer (3) und ein Düsenrohr aufnehmbar sind, wobei ein erster Motor (4) für die Schwenkung des Schlittens (2) und ein zweiter Motor (5) für die Verschiebung des Schlittens in Längsrichtung vorgesehen ist, wobei der Schwenkarm (1) durch zumindest zwei in vertikaler Richtung übereinanderliegenden, sich parallel zueinander erstreckende Pendelstützen (6, 7) gebildet ist, die in quer zur Längsrichtung der Schwenkachse beabstandeten Schwenklagern (8, 9) des Kopfes (10) und des Schlittens (2) nur in vertikaler Richtung D schwenkbar aufgenommen sind, und wobei Mittel (11) vorgesehen sind, die das Gewicht des Schwenkarms 1 und des Kopfes (10) zumindest anteilig kompensieren und es gestatten, den Schwenkarm (1) mit dem Kopf (10) ohne nennenswerten Kraftaufwand in vertikaler Richtung D zu verstellen.

## Beschreibung

### Technisches Gebiet

Die Erfindung betrifft eine Kabelbearbeitungseinrichtung, umfassend einen Schwenkarm, der an einem in horizontaler Richtung schwenkbaren und in Längsrichtung des Schwenkarms verschiebbaren Schlitten festgelegt ist und am vorderen Enden einen Kopf trägt, in dem zumindest ein Greifer und ein Düsenrohr aufnehmbar sind, wobei ein erster Motor für die Schwenkung des Schlittens und ein zweiter Motor für die Verschiebung des Schlittens vorgesehen ist.

Derartige Kabelbearbeitungseinrichtungen gelangen bei der Bestückung von Kabeln mit Crimpkontakten zur Anwendung. Die verschiedenen Bearbeitungsstationen sind dabei kreisförmig um die Lagerung des Schwenkarms verteilt angebracht und die zu bearbeitenden Kabel werden ihnen von dem horizontal hin- und her schwenkbaren Schwenkarm je nach Bedarf zugeführt.

### Stand der Technik

Eine solche Kabelbearbeitungseinrichtung ist aus der EP 1 447 888 A1 bekannt. Dabei ergibt sich dass Problem, dass das jeweils zu bestückende Kabel vor dem Einfügen in die Crimpkontakte über deren mehr oder weniger weit senkrecht nach oben stehende Crimpfahnen hinweggehoben werden müssen, bevor sie zwischen den Crimpfahnen an der vorgesehenen Befestigungsstelle abgesenkt und durch ein aufeinander zu gerichtetes Abwärtsbiegen der Crimpfahnen dauerhaft mit dem jeweiligen Crimpkontakt verbunden werden können.

Gemäß EP 1403 983 wird dieses Problem dadurch gemildert, dass das Kabel von vorn in den jeweiligen Zwischenraum der Crimpfahnen eingeschoben wird. Dabei muss allerdings ein vertikaler Abstand von dem Crimpkontakt eingehalten werden, um das Einschieben zu ermöglichen, mit der Folge, dass sich eine elastische Deformierung des Schwenkarms beim Abwärtsbiegen der Crimpfahnen ergibt.

### Darstellung der Erfindung

Der Erfindung liegt die Aufgabe zu Grunde, eine solche Kabelbearbeitungseinrichtung derart weiter zu entwickeln, dass es gelingt, das jeweilige Kabelende parallel zur Längsrichtung des jeweiligen Crimpkontaktes an der vorgesehenen Stelle zwischen den Crimpfahnen zu platzieren und die Crimpfahnen unter Vermeidung von vertikalen Kräften und elastischen Deformierungen in dem Schwenkarm und der ihn tragenden Einrichtungen zuverlässig anzucrimpen.

Diese Aufgabe wird erfindungsgemäß bei einer Kabelbearbeitungseinrichtung nach dem Oberbegriff durch die kennzeichnenden Merkmale von Anspruch 1 gelöst. Auf vorteilhafte Weiterbildungen nehmen die Unteransprüche Bezug.

Bei der erfindungsgemäßen Kabelbearbeitungseinrichtung ist es demgemäss vorgesehen, dass der Schwenkarm durch zumindest zwei in vertikaler Richtung übereinanderliegenden, sich parallel zueinander erstreckende Pendelstangen gebildet ist, die in quer zur Längsachse Schwenkachse beabstandeten Schwenklagern des Kopfes und des Schlittens nur in vertikaler Richtung schwenkbar aufgenommen sind und dass Mittel vorgesehen sind, die das Gewicht des Schwenkarms und des Kopfes zumindest anteilig kompensieren und es gestatten, den Schwenkarm mit dem Kopf ohne nennenswerten Kraftaufwand in vertikaler Richtung zu verstellen.

Der Schwenkarm ist somit nach Art eines Parallelogramms gestaltet, was es erlaubt, den Kopf unter Vermeidung von unerwünschten Krafteinleitungen und Deformierungen in ihm selbst und in der ihn tragenden Konstruktion in seiner Höhe zu verlagern. Die Mittel, die das Gewicht der relativ beweglichen Teile weitestgehend kompensieren, sind dabei eine große Hilfe. Die beim Crimpprozess über das Crimpwerkzeug in die Crimpfahnen und das zu bestückende Kabel eingeleiteten Kräfte genügen bereits für eine Relativverlagerung des Kopfes in vertikaler Richtung. Auch verschleißbedingte Abweichungen der tatsächlichen Crimpposition von der theoretisch vorgegebenen können nicht mehr dazu führen, dass beim Crimpprozess nennenswerte Kräfte in den Schenkarm und die damit verbunden Teile eingeleitet werden können. Für die Verbesserung der Dauerhaltbarkeit ist das von großem Vorteil.

Im einfachsten Fall wird der Schwenkarm so gelagert, dass es gelingt, das zu bestückende Kabel über die Crimpfahnen hinweg in die vorgesehene Kreisbogenposition des Crimpwerkzeuges zu überführen, das dort gelagerte Crimpwerkzeug zu betätigen und dabei zugleich den Kopf des Schwenkarms parallel zur Längsrichtung des Crimpkontaktes im erforderlichen Maße abzusenken. Das sich an die Schwenkbewegung anschließende Vorschieben des Kabels in den Zwischenraum der Crimpfahnen kann dann entfallen, was den Arbeitsschritt vereinfacht. Das Vorschieben kann jedoch auch beibehalten werden.

Durch die anschließende Betätigung des Crimpwerkzeugs ergibt sich in jedem Falle eine Absenkung des zu bestückenden Kabels in vertikaler Richtung, ohne das störende Kräfte in den Schwenkarm eingeleitet werden, und eine unlösbare Verbindung zwischen dem Crimpkontakt und dem Kabelende. Dabei werden auch die bisherigen, unerwünschte Deformationen des Kabels während des Crimpprozesses vermieden. Sie traten vor allem beim Bestücken von sehr dünnen Kabelenden ohne nennenswerte Biegesteifigkeit auf, wenn diese nach dem Einschieben in den Crimpkontakt einen vertikalen Abstand von diesem haben, was technisch unverzichtbar ist, und wenn der Crimpstempel anschließend senkrecht über den Crimpkontakt auf das Kabelende einwirkt und dies nach unten drückt. Bei der erfindungsgemäßen Bauform wird auch dann der das Kabelende haltende Kopf einfach im erforderlichen Maße abgesenkt, eine Verbiegung des Kabelendes vermieden und eine präzisere Festlegung des Kabelendes als bisher erreicht.

Im Anschluss an den Crimpprozess wird der Schwenkarm mit dem bestückten oder bearbeiteten Kabelende aus dem Werkzeug zurückgezogen und in die nächst folgende Arbeitsposition oder seine Ausgangsposition bewegt, bevor ein neuer Arbeitszyklus eingeleitet wird.

Die vorstehende Wirksamkeit lässt sich mit verschiedenen Bauformen der Pendelstützen erreichen.

Nach einer ersten vorteilhaften Ausgestaltung ist es vorgesehen, dass nur zwei Pendelstützen vorgesehen sind und dass nur die untere der Pendelstützen durch seitlich nebeneinanderliegende Lager sowohl mit dem Kopf als auch mit dem Schlitten verbunden ist, während die obere Pendelstütze nur durch einen zugfesten Stab gebildet ist, der sowohl mit dem Kopf als auch mit dem Schlitten jeweils nur durch ein einziges Lager verbunden ist. An beiden Enden des Schwenkarms ist somit eine Dreipunktlagerung vorgesehen, die ihn mit den jeweils angeschlossenen Teilen verbindet.

Durch die seitlich nebeneinander liegenden Lager der unteren Pendelstütze ergibt sich trotz geringer Größe der bei einem Schwenkvorgang bewegten Trägheitsmassen auch in Richtung der Schwenkbewegung eine präzise Führung des Kopfes durch den Schlitten, was es erlaubt, unter Vermeidung von nennenswerten Erschütterungen und Verwindungen des Schwenkarms schnelle und präzise Schwenkbewegungen zu erzielen und dabei das durch den Kopf geführte Kabel präzise im jeweiligen Bearbeitungs- bzw. Crimpwerkzeug zu platzieren.

Zweckmäßig ist bei einer solchen Bauform zumindest die untere Pendelstütze durch ein biegesteifes Rohr gebildet. Sie kann auch allein durch ein biegesteifes Rohr gebildet sein. Die während einer Schwenkbewegung von dem Schlitten auf den Kopf ausgeübten Kräfte können dadurch unter Vermeidung von nennenswerten elastischen Verformungen übertragen werden, was es erlaubt, auch bei sehr großen Beschleunigungen und Schwenkbewegungen exakt kontrollierbare Positionierungen des Kopfes zu erreichen.

Für die Befestigung der oberen Pendelstütze, die bei einer solchen Ausbildung nur auf Zug belastet ist, genügt es demgegenüber, wenn sie durch jeweils nur ein Schwenklager mit dem Kopf und dem Schlitten verbunden ist. Sie kann zur weiteren Reduzierung der bewegten Massen auch durch ein Drahtseil gebildet sein.

Als vorteilhaft hat es sich bei einer solchen Bauform bewährt, wenn die obere Pendelstütze von dem die untere Pendelstütze bildenden Rohr radial umschlossen ist. Sie ist aus Stabilitätsgründen in dem Rohr soweit wie möglich nach oben verlagert angebracht und erstreckt sich bei gleicher Anschlusslänge der Lager wie die untere Pendelstütze parallel zu dieser.

Das die untere Pendelstütze bildende Rohr, welches beispielsweise aus einem dünnwandigen Rohr aus GFK, CFK oder Metall, beispielsweise aus Aluminium besteht, kann hinsichtlich des Durchmessers groß dimensioniert und biegesteif gestaltet sein. Da es die obere Pendelstütze radial umschließt, besitzt der Schwenkarm ein elegantes Erscheinungsbild, in dem die obere Pendelstütze nicht nennenswert erkennbar ist. Auch Unfallgefahren wird dadurch vorgebeugt.

Die an den Enden angebrachten Gelenke zur Festlegung an dem Schlitten und dem Kopf sind demgemäss außermittig am unteren Rand des Außenumfangs des Rohres angebracht und bilden zweckmäßig ein Bestandteil von separat erzeugten Formteilen, die durch Anschweißen, Annieten und/oder Ankleben mit dem Rohr verbunden sind.

Die Mittel zur zumindest anteiligen Kompensation des Gewichtes des Schwenkarms und des Kopfes können an irgend einer Stelle zwischen dem Schwenkarm und dem Schlitten angeordnet sein, beispielsweise zwischen der oberen oder der unteren Pendelstütze und dem Schlitten. Sie können zumindest ein Gegengewicht, eine Feder und/oder einen Motor umfassen.

Falls passive Mittel zur Anwendung gelangen, wie beispielsweise Gegengewichte oder Federn, soll die Einstellung so erfolgen, dass sehr geringe Kräfte genügen, um den Kopf in seiner Höhe zu verschieben. Federn haben dabei den Vorteil einer besonders geringen Trägheitsmasse. Sie können zudem manuell oder sensorisch in ihrer Tragfähigkeit verstellt und auf einfache Weise durch einfache Beobachtung des Arbeitsablaufs an besondere Gegebenheiten und Erfordernisse exakt angepasst werden.

Falls aktive Mittel zur Anwendung gelangen, beispielsweise Motoren in Gestalt von Elektromotoren und oder von Kolben-/Zylindereinheiten, die mit einem Druckmittel beaufschlagbar sind, beispielsweise mit Druckluft oder einer Hydraulikflüssigkeit, besteht die Möglichkeit einer sensorischen Ansteuerung mit dem Ziel, den Kopf auch in vertikaler Richtung unter Vermeidung einer Einleitung von externen Kräften exakt zu positionieren. Insbesondere bei der Verarbeitung von extrem biegeweichen Kabeln, die im Bereich der Mikroelektronik zunehmend zur Anwendung gelangen, ist dies von großem Vorteil in Hinblick auf die Vermeidung von Fehlcrimpungen. Auch bei solchen Bauformen ist gegebenenfalls eine manuelle Korrekturmöglichkeit sinnvoll.

Die Mittel können grundsätzlich zwischen den einander diagonal gegenüberliegenden Gelenken der verschiedenen Pendelstützen des Schwenkarms wirksam sind. Sie sind bei einer solchen Bauform allerdings in erheblichem Umfang in die Trägheitsmassen einbezogen, die bei einer Schwenkbewegung des Schwenkarm zu bewegen sind. Als vorteilhafter hat es sich demgegenüber erwiesen, wenn die Mittel mit einem Ende an einer der Pendelstützen des Schwenkarms angreifen und mit dem anderen Ende in dem Schlitten und/oder in einer den Schlitten aufnehmenden Führung abgestützt sind. Die Mittel können dabei zumindest ein Abstütz- und/oder Zugmittel umfassen, beispielsweise ein Drahtseil oder eine Zugstange.

### Kurzbeschreibung der Zeichnung

Eine beispielhafte Ausführung der Erfindung ist in der beiliegenden Zeichnung dargestellt. Sie wird nachfolgend näher erläutert. E zeigen:
Fig. 1 Eine Kabelbearbeitungseinrichtung in perspektivischer Ansicht schräg von oben
Fig. 2 die Kabelbearbeitungseinrichtung nach Fig. 1 eine Ansicht von der Seite
Fig. 3 einen Schwenkarm, bei dem die untere Pendelstütze durch ein verwindungssteifes Rohr gebildet ist, das am unteren Rand zwei in Richtung der Schwenkbewegung benachbarte Schwenklager zur knickfesten Verbindung die aus einem zugsteifen Stab gebildete obere Pendelstütze radial umschließt.

### Ausführung der Erfindung

Die gezeigte Kabelbearbeitungseinrichtung umfasst einen Schwenkarm 1, der an einem in horizontaler Richtung schwenkbaren und in Längsrichtung des Schwenkarms 1 verschiebbaren Schlitten 2 festgelegt ist und der am vorderen Ende einen Kopf 10 trägt, in dem zumindest ein Greifer 3 und ein Düsenrohr aufnehmbar sind, wobei ein erster Motor 4 für die Schwenkung des Schlittens 2 und ein zweiter Motor 5 für die Verschiebung des Schlittens 2 in Längsrichtung vorgesehen ist. Der Schwenkarm 1 ist durch zwei in vertikaler Richtung übereinanderliegende, sich parallel zueinander erstreckende Pendelstützen 6, 7 gebildet, die in quer zur Längsrichtung der Schwenkachse beabstandeten Schwenklagern 8, 9 des Kopfes 10 und des Schlittens 2 nur in vertikaler Richtung D schwenkbar aufgenommen sind, wobei Mittel 11 vorgesehen sind, die das Gewicht des Schwenkarms 1 und des Kopfes 10 zumindest anteilig kompensieren und es gestatten, den Schwenkarm 1 mit dem Kopf 10 und gegebenenfalls dem Düsenrohr ohne nennenswerten Kraftaufwand in vertikaler Richtung D zu verstellen. Das Düsenrohr besteht aus einem Einsatz, der zumeist austauschbar an dem Kopf festlegbar ist und der von einer Längsbohrung durchdrungen ist, die sich parallel zur Längsrichtung des Schwenkarms horizontal erstreckt und dazu bestimmt ist, das zu verarbeitende Kabel dem Bearbeitungswerkzeug präzise justiert zuzuführen.

Bei dem gezeigten Ausführungsbeispiel sind nur zwei Pendelstützen 6, 7 vorgesehen, wobei die untere Pendelstütze 6 durch seitlich nebeneinanderliegende Lager 8 sowohl mit dem Kopf 10 als auch mit dem Schlitten 2 verbunden ist. Sie besteht aus einem biegesteifen Rohr aus Aluminium und gewährleistet, dass der Kopf in Umfangsrichtung unter Vermeidung von unerwünschten, seitlichen Pendelbewegungen hochgradig beschleunigt, abgebremst und geführt werden kann.

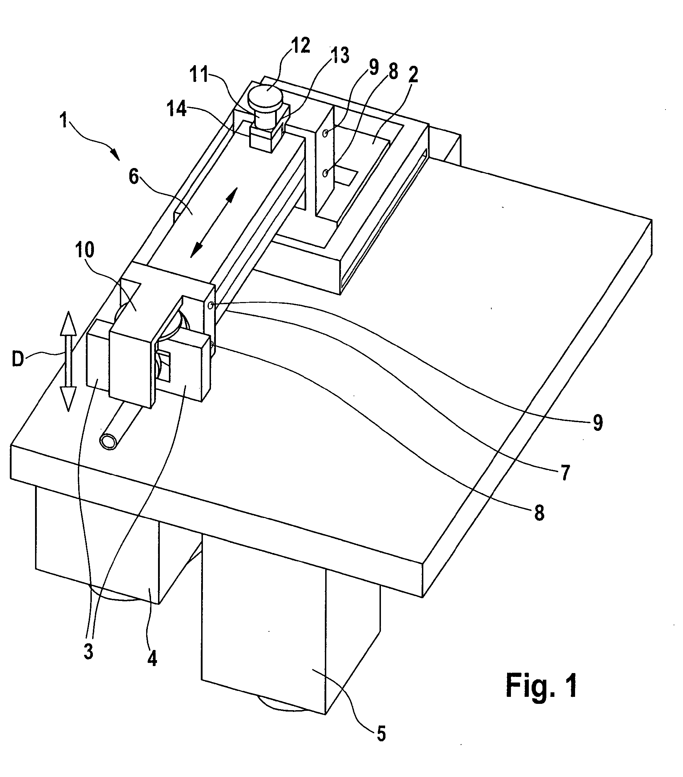

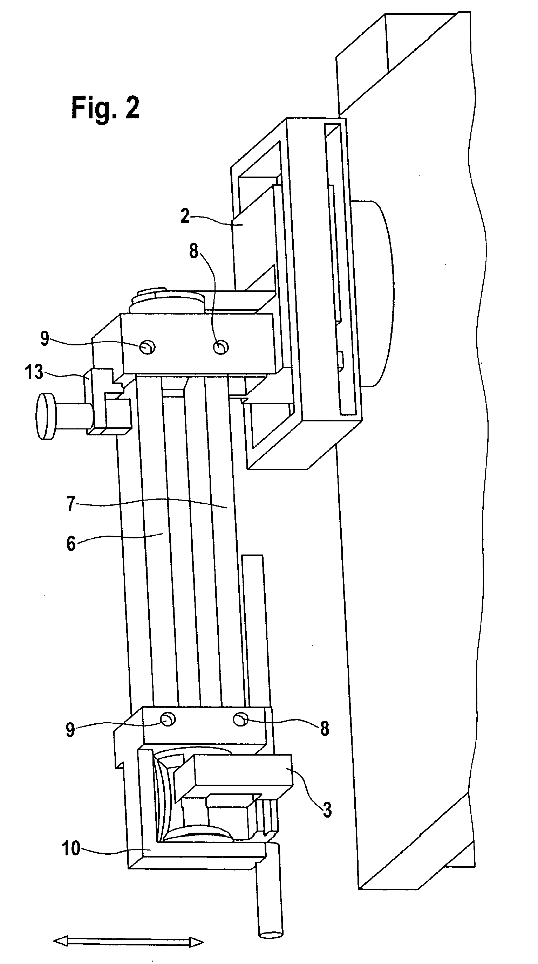

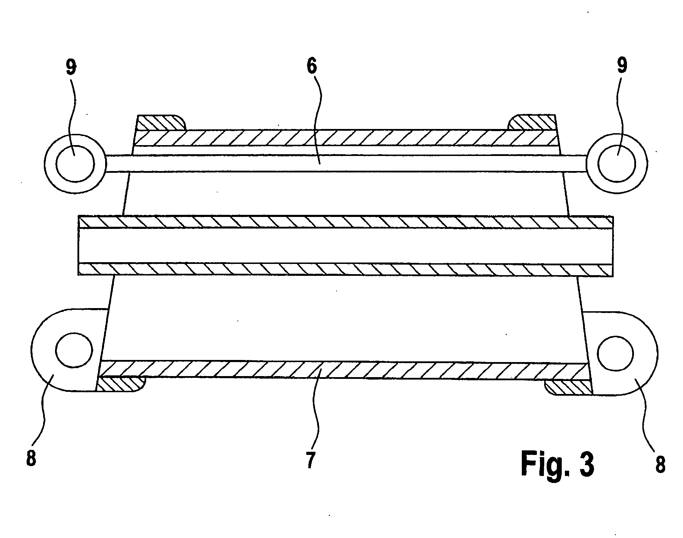

Die obere Pendelstütze 7 kann abweichend von der Darstellung nach Fig. 1 und Fig. 2, die sehr robust ist, auch aus einem dünnen Stab bestehen und durch nur ein Schwenklager 9 mit dem Kopf 10 und dem Schlitten 2 verbunden wobei die obere Pendelstütze 6 von dem durch die untere Pendelstütze gebildeten Rohr umschlossen ausgebildet ist, wie in Fig. 3 gezeigt. Eine solche Ausbildung ist extrem verwindungssteif bei noch geringerem Gewicht. Das Rohr ist durch zwei seitlich benachbarte Schwenklager 8 mit dem Kopf 10 und dem Schlitten 2 verbunden, der Stab nur durch jeweils ein mittig angeordnetes Schwenklager 9. Dennoch ergibt sich beiderseits eine völlig verwindungssteife, statisch stabile Anbindung von extrem geringem Gewicht.

Die Mittel 11 zur zumindest anteiligen Kompensation des Gewichtes des Schwenkarms 1, des Kopfes 10 und des gegebenenfalls daran festgelegten Düsenrohrs umfassen zumindest ein Gegengewicht, eine Feder und/oder einen Motor, bei dem vorliegenden Ausführungsbeispiel eine Zugfeder, die in einem Stellantrieb enthalten ist. Die Zugfeder ist durch eine am oberen Ende angreifende Stellschraube 12 in ihrer Wirksamkeit manuell verstellbar. Die Stellschraube 12 ist auf einer starr mit dem Schlitten 2 verbundenen Konsole 13 abgestützt. Das untere Ende der Feder greift an einer Konsole 14 an, die unlösbar mit der oberen Pendelstütze 6 verbunden ist.

Fig. 3 zeigt einen Schenkarm 1, beidem die untere Pendelstütze 7 durch ein dünnwandiges Rohr gebildet ist, das die obere Pendelstütze 6 radial umschließt.
Die untere Pendelstütze 7 besteht aus Aluminium. Sie im Bereich der beiden Enden in Halteringen festgelegt, die an den am weitesten voneinander beabstandeten Enden unten mit in Längsrichtung vorstehenden Lagern 8 versehen sind. In der Darstellung ist jeweils nur eines der Lager gezeigt. In der konkreten Bauform sind zwei derartige Lager in größtmöglichem seitlichem Abstand voneinander vorgesehen, um die bei einer Schenkbewegung einzuleitenden Beschleunigungskräfte unter Vermeidung von undefinierten Knickbewegungen über den Schwenkarm in den Kopf 10 einleiten zu können. Ferner ist das Rohr am oberen Ende kürzer ausgebildet als am unteren Ende, um den Kopf ohne gegenseitige Berührung nach oben und nach unten verlagern zu können.

Die obere Pendelstütze 6 besteht aus einem zugfesten Stab aus Aluminium. Sie ist innerhalb des die untere Pendelstütze 7 bildenden Rohres angeordnet und an den Enden mit Lagern 9 versehen, die denselben Abstand voneinander haben wie die Lager 8 der unteren Pendelstütze 7. Der Kopf 10 kann dadurch unter Vermeidung von Kippbewegungen seiner vertikalen Achse vertikal verlagert werden.

Die an den Enden des in Fig. 3 gezeigten Schwenkarms angeordneten Lager 8, 9 bilden jeweils zusammen eine statisch stabile und verwindungssteife Dreipunktlagerung. Bezogen auf die Größe der enthaltenen Trägheitsmasse ist die Stabilität extrem hoch, was die Dauerhaltbarkeit begünstigt.

Außerdem bietet der in dem die untere Pendelstütze bildenden Rohr verbleibende Freiraum die Möglichkeit, sekundäre Antriebs- oder Versorgungsmittel des Kopfes 10 geschützt und geschmacklich ansprechend unterzubringen.

## Patentansprüche

1. Kabelbearbeitungseinrichtung, umfassend einen Schwenkarm (1), der an einem in horizontaler Richtung schwenkbaren und in Längsrichtung des Schwenkarms (1) verschiebbaren Schlitten (2) festgelegt ist und am vorderen Ende einen Kopf (10) trägt, in dem zumindest ein Greifer (3) und ein Düsenrohr aufnehmbar sind, wobei ein erster Motor (4) für die Schwenkung des Schlittens (2) und ein zweiter Motor (5) für die Verschiebung des Schlittens in Längsrichtung vorgesehen ist, **dadurch gekennzeichnet, dass** der Schwenkarm (1) durch zumindest zwei in vertikaler Richtung übereinanderliegenden, sich parallel zueinander erstreckende Pendelstützen (6, 7) gebildet ist, die in quer zur Längsrichtung der Schwenkachse beabstandeten Schwenklagern (8, 9) des Kopfes (10) und des Schlittens (2) nur in vertikaler Richtung D schwenkbar aufgenommen sind, dass Mittel (11) vorgesehen sind, die das Gewicht des Schwenkarms 1 und des Kopfes (10) zumindest anteilig kompensieren und es gestatten, den Schwenkarm (1) mit dem Kopf (10) ohne nennenswerten Kraftaufwand in vertikaler Richtung D zu verstellen.

2. Kabelbearbeitungseinrichtung nach Anspruch 1, **dadurch gekennzeichnet, dass** nur zwei Pendelstützen (6, 7) vorgesehen sind und dass zumindest die untere Pendelstütze (6) durch seitlich nebeneinanderliegende Lager (8) in Schwenkrichtung knicksteif sowohl mit dem Kopf (10) als auch mit dem Schlitten (2) verbunden ist.

3. Kabelbearbeitungseinrichtung nach Anspruch 1, **dadurch gekennzeichnet, dass** nur die untere Pendelstütze (6) durch ein biegesteifes Rohr und die obere Pendelstütze durch einen zugsteifen Stab gebildet ist.

4. Kabelbearbeitungseinrichtung nach einem der Ansprüche 1 bis 3, **dadurch gekennzeichnet, dass** die obere Pendelstütze (7) durch jeweils nur ein Schwenklager (9) mit dem Kopf (10) und dem Schlitten (2) verbunden ist.

5. Kabelbearbeitungseinrichtung nach Anspruch 4, **dadurch gekennzeichnet, dass** die obere Pendelstütze (7) von dem Rohr umschlossen ist.

6. Kabelbearbeitungseinrichtung nach einem der Ansprüche 1 bis 5, **dadurch gekennzeichnet, dass** die Mittel (11) zur zumindest anteiligen Kompensation des Gewichtes des Schwenkarms (1), des Kopfes (10) und des gegebenenfalls daran festgelegten Düsenrohrs zumindest ein Gegengewicht, eine Feder und/oder einen Motor umfassen.

7. Kabelbearbeitungseinrichtung nach einem der Ansprüche 1 bis 6, **dadurch gekennzeichnet, dass** die Mittel (11) in ihrer Wirksamkeit manuell und/oder sensorisch verstellbar sind.

8. Kabelbearbeitungseinrichtung nach einem der Ansprüche 6 oder 7, **dadurch gekennzeichnet, dass** die Mittel (11) an dem Schwenkarm (7) angreifen und in dem Schlitten (2) abgestützt sind.

9. Kabelbearbeitungseinrichtung nach Anspruch 6, **dadurch gekennzeichnet, dass** die Mittel (11) zumindest ein Abstütz- und/oder Zugmittel umfassen.
